# EUROPÄISCHE PATENTSCHRIFT

(11) **EP 3 615 320 B1**
(45) Veröffentlichungstag und Bekanntmachung des Hinweises auf die Patenterteilung: **07.04.2021**
(21) Anmeldenummer: 18705842.5
(22) Anmeldetag: 05.02.2018
(51) Int. Cl.: B29D 29/10, B29D 29/08, B29C 43/18, B65G 43/02, F16G 1/08, F16G 5/20, F16G 1/28, F16G 5/06, F16G 1/10, F16G 5/08, B29K 105/08, B29K 7/00, B29K 105/20, B29K 105/10, B29L 31/00

(54) **ANTRIEBSRIEMEN AUS ELASTOMEREM MATERIAL MIT EINGEBETTETEN ELEKTRONISCHEN BAUTEILEN**
DRIVE BELTS MADE OF AN ELASTOMER MATERIAL HAVING EMBEDDED ELECTRONIC COMPONENTS
COURROIES DE TRANSMISSION EN UN MATÉRIAU ÉLASTOMÈRE, COMPORTANT DES COMPOSANTS ÉLECTRONIQUES INCORPORÉS

(30) Priorität: 26.04.2017 DE 102017206980
(43) Veröffentlichungstag der Anmeldung: 04.03.2020
(73) Patentinhaber: ContiTech Antriebssysteme GmbH, 30165 Hannover (DE)
(72) Erfinder: SATTLER, Heiko, 30900 Wedemark (DE); LÜKER, Svenja, 30419 Hannover (DE); MAHNKEN, Claus-Lüder, 27367 Ahausen (DE); RECK, Siegfried, 31582 Nienburg / Weser (DE); ROSEN, Simon, 30161 Hannover (DE)
(74) Vertreter: Continental Corporation
(86) Internationale Anmeldenummer: PCT/EP2018/052728
(87) Internationale Veröffentlichungsnummer: WO 2018/197061

(56) Entgegenhaltungen:
- DE-A1- 19 801 253
- DE-A1-102009 003 732
- DE-A1-102010 002 551
- JP-A- 2009 007 078
- US-A- 3 731 786
- US-A- 4 621 727
- US-A1- 2011 285 388

## Beschreibung

Die Erfindung betrifft einen Antriebsriemen, ausgebildet als Rollen oder Scheiben umlaufendes längliches Zug- oder Antriebselement aus elastomerem Material, mit eingebetteten und in Längsrichtung des Riemens sich erstreckenden Verstärkungselementen bzw. Zugträgern. Ebenfalls ist ein Herstellungsverfahren für derart ausgebildete Antriebsriemen beansprucht.

Der Einsatz von solchen Riemen, beispielsweise als Elastomerriemen in kapitalintensiven Agrarmaschinen oder stationären Industrieanlagen erfordert eine sorgfältige vorbeugende Instandhaltung. Dazu werden solche Antriebsriemen derzeit früh und präventiv gewechselt, um Schäden an den Maschinen oder Anlagen und somit kostspielige Stillstandszeiten zu vermeiden.

Das Auswechseln solcher Riemen erfolgt dabei aufgrund von Erfahrungswerten und langjährigen Aufschreibungen unter unterschiedlichen Belastungskollektiven. Eine effektive Überwachung während des Betriebes ist kaum möglich.

Es wäre daher wünschenswert, solche Riemen mit Überwachungssystemen zu versehen, beispielsweise mit elektronischen Bauteilen, die Messwerte von Riemen im Betrieb nach außen übertragen können und damit eine zustandsabhängige Wartung erlauben. Elektronische Bauteile können aber bisher noch nicht dauerhaft und funktionsfähig in solchen Riemen integriert werden.

Das liegt zum einen daran, dass solche Antriebsriemen als Elastomerbauteile bei etwa 200°C vulkanisiert werden. Bei solch einer Temperatur ist die Funktionsfähigkeit von Elektronikbauteilen durch die Vulkanisation gefährdet, wenn - wie üblich - solche Elektronikbauteile vor der Vulkanisation eingebracht werden.

Zudem birgt die übliche Herstellung von z.B. endlosen Riemen in Wickeln auf Riemenaufbautrommeln die Gefahr, dass sich bei der nachträglichen Vereinzelung eines Wickels bzw. Antriebsriemens die Elektronik nicht exakt lokalisieren lässt und durch die zur Vereinzelung erforderlichen Schnitte zerstört werden kann. Dies ist insbesondere dann der Fall, wenn Fließprozesse während der Vulkanisation eine zuvor gekennzeichnete Position eines Elektronikbauteils verändern.

Beim Umlauf eines Riemens im Betrieb ist ein Elektronikbauteil schließlich den Dehnungen und Stauchungen im Riemenkörper ausgesetzt, was die Haltbarkeit der Elektronikbauteile - unabhängig vom Zeitpunkt der Einbringung - stark reduziert.

Für die Erfindung bestand also die Aufgabe, einen Antriebsriemen bereitzustellen, bei dem es möglich ist, einen betriebsabhängigen Verschleißzustand mithilfe von Elektronikbauteilen zu überwachen. Weiterhin bestand die Aufgabe, eine Konstruktion und ein Herstellungsverfahren anzugeben, mit der bzw. mit dem ein sicherer und positionsgenauer Einbau von Elektronikbauteilen möglich wird, ohne dass das Elektronikbauteil bereits beim Vulkanisieren zerstört wird oder aufgrund von Spannungen im Riemen während des Betriebes zu hoch beansprucht wird.

Gelöst wird diese Aufgabe durch die Merkmale des Hauptanspruchs. Weitere vorteilhafte Ausbildungen sind in den Unteransprüchen offenbart.

Dabei ist das erfindungsgemäße Antriebsriemen durch folgende Merkmale gekennzeichnet:
- der Riemen weist ein oder mehrere im elastomeren Material eingebettete länglich-rohrförmige Behältnisse (7) auf, in deren Hohlraum nach der Vulkanisation elektronische Bauteile (10) positionierbar sind, vorzugsweise Sensoren, Signalverarbeitungs
- oder Steuerungseinrichtungen und/oder Übertragungseinrichtungen,
- das rohrförmige Behältnis (7) ist so im elastomeren Material eingebettet, dass seine Längsachse bzw. die Richtung ihrer größten Ausdehnung (12) im Wesentlichen quer zur Hauptbiegerichtung (13) des Riemens ausgerichtet ist - das rohrförmige Behältnis (7) ist ein Kunststoffrohr bzw. -röhrchen, vorzugsweise aus Polyamid (PA) oder Polyphenylensulfid (PPS).

Eine solche erfindungsgemäße Ausbildung von schützenden Behältnissen für die elektronischen Bauteile und deren Ausrichtung quer zur hauptsächlichen Biegerichtung bietet einen exzellenten Schutz der in den Hohlkörpern befindlichen Elektronikbauteile im Betrieb und bei der Herstellung mittels Vulkanisation. Gleichzeitig ist die Lage der länglich-rohrförmige Behältnisse/Hohlkörper unschädlich für die Betriebsfestigkeit des Riemens. Solche Behältnisse, deren größte Ausdehnung quer zur späteren Hauptbiegerichtung eines Riemens liegt, erzeugen als Rundkörper die minimal mögliche Kerbwirkung im Riemenkörper. Nach der Vulkanisation und Vereinzelung eines Wickels sowie ggf. nach Herstellung eines Flankenwinkels werden die Elektronikbauteile in die rohrförmigen Hohlkörper eingeführt, dort positioniert und angeschlossen.

Dafür besteht eine vorteilhafte Weiterbildung darin, dass die elektronischen Bauteile innerhalb des Hohlraums mit einer aushärtenden Masse umgeben und fixiert sind, vorzugsweise mit einem aushärtenden Kunststoffgießharz. Dies erlaubt eine besonders einfache Einbringung der Elektronikbauteile bei gleichzeitiger örtlicher Fixierung.

Eine weitere vorteilhafte Ausbildung besteht darin, dass die elektronischen Bauteile innerhalb des Hohlraums mit stoßdämpfendem Material umgeben und das rohrförmige Behältnis endseitig mit einem Verschluss oder Stopfen versehen ist. Eine solche Ausbildung verringert die Belastung der Elektronikbauteile insbesondere bei plötzlichen Biegebelastungen, die beispielsweise dadurch entstehen, dass ein als Zahnriemen ausgebildeter Antriebsriemen stoßartig in eine Zahnriemenscheibe einläuft.

Eine weitere vorteilhafte Ausbildung besteht darin, dass die elektronischen Bauteile innerhalb des Hohlraums mit wärmeleitfähigem Material (Wärmeleitpaste) umgeben und das rohrförmige Behältnis endseitig mit einem Verschluss oder Stopfen versehen ist. Durch eine solche Ausbildung kann Wärme, die sich beim Betrieb der elektronischen Bauteile innerhalb des Behältnisses entwickelt, auf einfache Weise abgeleitet werden.

Erfindungsgemäß ist das rohrförmige Behältnis ein Kunststoffrohr bzw. -röhrchen, vorzugsweise aus Polyamid (PA) oder Polyphenylensulfid (PPS). Letzteres weist einen Schmelzpunkt von etwa 285° auf und ist somit bestens geeignet, die bei der Vulkanisation auftretenden Temperaturen von bis zu 200° ohne Schaden zu überstehen.

Eine weitere vorteilhafte Ausbildung besteht darin, dass das rohrförmige Behältnis mit einer Längsseite des Bandes oder Riemens in Verbindung steht und der Hohlraum von dort zugänglich ist. Damit erleichtert man das Einbringen der Elektronikbauteile nach der Herstellung der einzelnen Riemen, beispielsweise nach der Herstellung eines Antriebsriemens.

Erfindungsgemäß ist die Ausbildung eines Antriebsriemens besonders gut anwendbar als Zahnriemen oder Breitkeilriemen. Die Geometrie solcher Riemen erlaubt, insbesondere im Zusammenhang mit dem ebenfalls beanspruchten erfindungsgemäßen Herstellungsverfahren, eine sichere Position der Elektronikbauteile beispielsweise im Zahnfußbereich eines Zahnriemens, der in Bezug auf die Einbaumaße bzw. den zur Verfügung stehenden Einbauraum relativ unkritisch ist.

Im Hinblick auf das erfindungsgemäße Herstellverfahren soll zunächst ein übliches Formverfahren eines Antriebsriemens beschrieben werden, wie es im Stand der Technik bekannt ist.

Bei einem bekannten Formverfahren wird das Profil des Rohlings während der Vulkanisation erzeugt, nämlich durch eine zylindrische Vulkanisationsform, die auf ihrer Innenseite das Negativ des Profils, beispielsweise eines Zahnprofils oder Rippenprofils aufweist, in welches der Rohling vor bzw. während der Vulkanisation eingepresst wird.

Nach ihrer Herstellung und Vulkanisation weisen die Riemen also zunächst auf ihrer Außenseite das Profil auf. Nachdem die einzelnen Ringe vom Wickel abgeschnitten sind, werden die Ringe "umgekrempelt" so dass ihre profilierte Seite auf der Innenseite liegt. Man erhält so den landläufig bekannten Antriebsriemen, der mit seiner profilierten Innenseite komplementär gestaltete Riemenscheiben antreibt und auf dessen Rückseite gegebenenfalls Spannrollen oder weitere Antriebe kraftschlüssig angeschlossen werden.

Bei einem vielfach üblichen Formverfahren erfolgt der Aufbau des Rohlings auf einer so genannten Riemenaufbautrommel. Mit Blick auf das weitere Fertigungsverfahren und das spätere "Umkrempeln" muss auf dieser Trommel natürlich zuerst die Rückseite des Riemens aufgebaut werden, nämlich die so genannte Decklage. Letztere kann ein- oder zweischichtig aufgebaut sein und mit verschiedenen Zuschlagstoffen oder Beschichtungen versehen sein.

Auf diese Decklage wird dann der so genannte "Zugstrang" aus einem oder mehreren Festigkeitsträgern aufgebracht. Die Festigkeitsträger bestehen üblicherweise aus einem oder mehreren umeinander geschlagenen oder gedrehten Fasern, Fäden oder Corden und werden über die gesamte Breite der Riemen-Aufbautrommel in mehr oder weniger engen Windungen ein oder mehrlagig aufgespult. Im fertigen Riemen sind die Festigkeitsträger für die Zugkraftübertragung maßgeblich und befinden sich dann in den Bereichen zwischen Decklage und dem Unterbau des Riemens.

Nach Aufbringen der Decklage(n) und des Zugstrangs wird der so genannte "Unterbau" oder Grundkörper des Antriebsriemens, d.h. der Bereich, der später das Profil und gegebenenfalls noch eine geringe weiter Schichtdickc aufweist, wird auf den Zugstrang aufgetragen. Der Auftrag des Unterbaus erfolgt dabei beispielsweise in Form einer dünnen Platte aus elastomeren Material/Gummi, deren Breite der Länge der Riemen-Aufbautrommel und deren Länge in etwa dem Umfang der Riemen-Aufbautrommel entspricht. Die Enden dieser Platte können in dem noch klebrigen Zustand leicht zusammengefügt werden.

Als letztes wird oft noch eine Gewebelage aufgetragen, die für den fertigen Keilrippenriemen besonderer Eigenschaften im Profilbereich bereitstellt, beispielsweise zur Geräusch- oder Reibungsminderung beiträgt. Die Gewebelage komplettiert so den Keilrippenrohling.

Der so entstandene Antriebsriemenrohling, nämlich der unvulkanisierte Verbund aus Decklage, Zugstrang und Unterbau und ggf. Gewebelage wird dann in die im Durchmesser etwas größere zylindrische Vulkanisationsform so eingebracht, dass der Unterbau bzw. die Gewebelage der mit einem Negativ des Profils versehenen Innenseite der Vulkanisationsform zugewandt ist.

Danach wird der Antriebsriemenrohling erwärmt und so in das umgebende Negativ der Vulkanisationsform einpresst, dass der Unterbau in das Negativ gedrückt und mit Antriebsriemenprofil versehen wird.

Dies kann z.B. so geschehen, dass die Riemenaufbautrommel entfernt wird und in den inneren Hohlraum der Vulkanisationsform und des Rohlings eine üblicherweise aus Gummi bestehende Manschette und entsprechende Einrichtungen zur Dehnung der Manschette und zu ihrer Erwärmung eingeführt werden, üblicherweise zur Beaufschlagung der Manschette mit Druckluft und mit heißem Dampf.

Die Manschette wird dann mit dem heißen Dampf ausgedehnt, legt sich an die Decklage an und presst den gesamten Rohling in das umgebende Negativ der Vulkanisationsform, wodurch die äußere Schicht des Rohling, nämlich der Unterbau bzw. die Gewebelage, in das Negativ gedrückt und somit mit einem "geformten" Profil versehen wird.

In einer kinematischen Umkehrung können die Formung des Profils und das Vulkanisieren auch so geschehen, dass das die umgebende mit dem Profilnegativ versehene Vulkanisationsform als Heizmanschette von außen auf den noch auf der Riemenaufbautrommel befindlichen Rohling zugefahren wird und dadurch der Rohling zum fertigen Wickel geformt und ausvulkanisiert wird.

Bei diesen bekannten Formverfahren, bei dem der Antriebsriemenrohling und das umgebende Negativ der Vulkanisationsform so zusammengepresst werden, dass der Unterbau in das Negativ gedrückt und mit Antriebsriemenprofil versehen wird, setzt nun das erfindungsgemäße Verfahren zur Herstellung der mit Elektronikbauteilen versehenen Bänder oder Riemen in Form eines Antriebsriemens an und löst die Aufgabe, ein Herstellungsverfahren anzugeben, mit dem ein sicherer und positionsgenauer Einbau von Elektronikbauteile möglich wird, ohne dass das Elektronikbauteile bereits beim Vulkanisieren zerstört oder aufgrund von Spannungen im Band oder Riemen während des Betriebes zu hoch beansprucht werden.

Dabei werden erfindungsgemäß während des Aufbaus des Rohlings auf der Riemenaufbautrommel zwischen die einzelnen Lagen oder Schichten der Decklagen oder des Unterbaus über den Umfang des Rohlings länglich-rohrförmige Hohlkörper eingebracht werden, vorzugsweise Röhrchen aus Polyamid (PA) oder Polyphenylensulfid (PPS), die in besonderer Weise dazu geeignet sind, die hohen Vulkanisationstemperaturen problemlos auszuhalten.

Dabei werden die Längsachsen der länglich-rohrförmige Hohlkörper bzw. die Richtung ihrer größten Ausdehnung im Wesentlichen parallel zur Achse der Aufbautrommel ausgerichtet, wobei die Hohlkörper dann mit dem gesamten Verbund vulkanisiert und in der Elastomermatrix eingebunden werden.

Nach der Vulkanisation werden einzelne Ringe vom Keilrippenrohling abgeschnitten und zu einzelnen Antriebsriemen umgekrempelt, wie auch bisher bereits üblich.

Auf diese Weise wird mit wenigen zusätzlichen Verfahrensschritten dass bisher bekannte Verfahren so umgeformt dass die länglich-rohrförmige Hohlkörper als einfache Röhrchen ohne großen Aufwand während des Aufbauverfahrens eingebracht werden können und mit in den gesamten Wickel einvulkanisiert werden.

Eine vorteilhafte Weiterbildung des Verfahrens besteht darin, dass über die Länge des Rohlings auf der Riemenaufbautrommel an einer Umfangsposition jeweils ein länglich-rohrförmiger Hohlkörper oder mehrere mit Abstand hintereinanderliegende Hohlkörper eingebracht werden. Auf diese Weise werden die Hohlkörper/Röhrchen "segmentweise" eingebracht und können in Bezug auf ihre Längsposition auf der Aufbautrommel so aufgelegt werden, dass beim späteren Schneiden der einzelnen Antriebsriemen die Hohlkörper an den vorgesehenen Positionen liegen, beispielsweise mit der jeweiligen äußeren Seitenflächen eines Breitriemens korrespondieren und von dort zugänglich sind, um die Elektronikbauteile einzubringen.

Eine weitere vorteilhafte Ausbildung besteht darin, dass zur Fixierung des Hohlkörpers an einer Umfangsposition Drähte oder Zugmittel durch den Hohlkörper geführt sind, die nach der Vulkanisation entfernt werden. Dies erleichtert natürlich die genaue Position der Hohlkörper bzw. der Röhrchen bei der Herstellung und vermeidet, dass durch Fließprozesse bei der Vulkanisation die Hohlkörper im Elastomer verschoben werden.

Anhand eines Ausführungsbeispiels in Form eines Antriebsriemens soll die Erfindung näher erläutert werden. Es zeigen
- Fig. 1: einen Abschnitt eines als Breitkeilriemen ausgebildeten erfindungsgemäßen Antriebsriemens,
- Fig. 2: einen Ausschnitt aus dem Wickelrohling auf der Riemenaufbautrommel mit umgebender profilierter Heizmanschette zu einem vor der Vulkanisation liegenden Zeitpunkt der Herstellung,
- Fig. 3: prinzipiell den Zustand des noch auf der Riemenaufbautrommel befindlichen Antriebsriemenrohlings nach der Vulkanisation in einer perspektivischen Gesamtansicht,
- Fig. 4: einen Abschnitt einer weiteren Ausführung eines als Breitkeilriemen ausgebildeten erfindungsgemäßen Antriebsriemens.

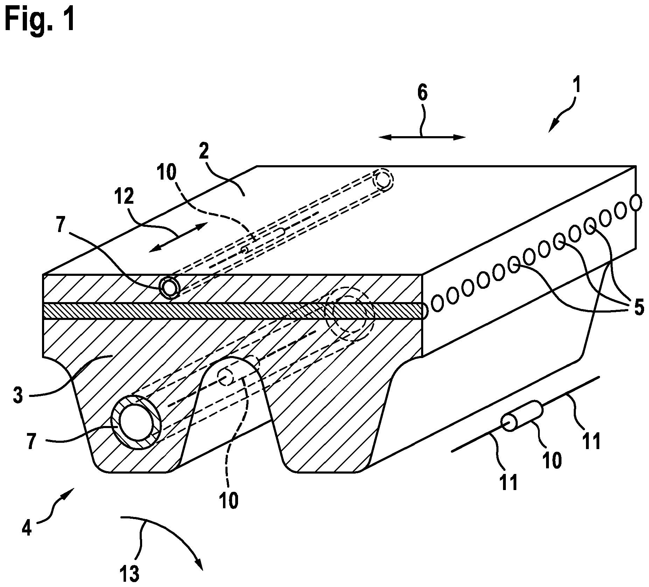

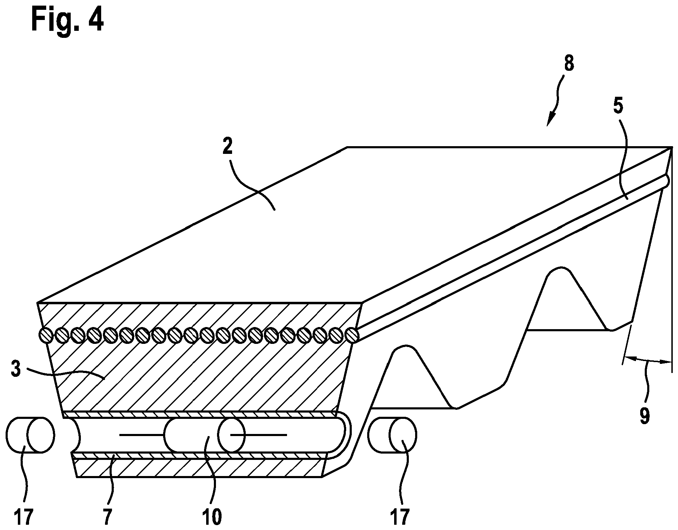

Fig. 1 zeigt einen Abschnitt eines als Breitkeilriemen ausgebildeten Antriebsriemens 1 aus einer Gummimischung, bei dem zwar die Flankenwinkel, d.h. das Abschrägen der Seiten, noch nicht vorhanden sind, der ansonsten aber vollständig vulkanisiert und fertig hergestellt ist. Fig. 4 zeigt einen ebensolchen Antriebsriemen 8, bei dem der Flankenwinkel 9 bereits ausgebildet ist, beispielsweise durch einen Schleifprozess.

Der Breitkeilriemen weist eine Decklage 2 und einen mit dem Zahnprofil 3 versehenen Unterbau 4 auf. Im Bereich zwischen Decklage und Unterbau erkennt man Corde 5 als Verstärkungselemente und Zugträger, die in der Gummi-Matrix eingebettet sind und sich in Längsrichtung 6 des Riemens erstrecken.

Der Antriebsriemen weist zwei im elastomeren Gummimaterial eingebettete länglich-rohrförmige Behältnisse 7 auf, in dessen inneren Hohlraum elektronische Bauteile 10 angeordnet sind. Zur Verdeutlichung ist ein solches elektronisches Bauteil 10 noch einmal rechts unten neben dem Antriebsriemenabschnitt allein dargestellt.

Das elektronische Bauteil 10 beinhaltet hier einen Temperatursensor, einen Beschleunigungssensor und ein Dehnungssensor, sowie eine zentrale Prozessor-und Funkeinheit und zwei Antennen 11. Die Sensoren und die Prozcssorcinhcit sind hier nicht näher dargestellt und bestehen aus üblichen elektronischen Elementen.

Mithilfe einer solchen Sensorik sind die Temperaturbelastung des Antriebsriemens, die Laufgeschwindigkeit, die Zugkraft und die im Betrieb auftretenden irreversible Dehnungen messbar und können mithilfe der Funkeinheit und der Antennen berührungslos ausgelesen werden. Auf diese Weise können z.B. im Rahmen einer Schadensakkumulations-Analyse die Belastungen des Riemens und seine entsprechende Lebensdauer abgeschätzt werden. Dadurch kann der Riemen zum optimalen Zeitpunkt ausgetauscht werden.

Die rohrförmigen Behältnisse 7 sind hier kleine Röhrchen von ca. 2,5 bis 5 mm Durchmesser und sind so im elastomeren Material eingebettet, dass ihre Längsachse bzw. die Richtung ihrer größten Ausdehnung 12 quer zur Hauptbiegerichtung 13 des Antriebsriemens ausgerichtet ist, was bei z.B. bei dem hier vorliegenden endlosen Antriebsriemen in der Regel heißt, dass sie auch quer zur Laufrichtung bzw. Längsrichtung 6 ausgebildet sind.

Die elektronischen Bauteile innerhalb des Hohlraums sind mit einem aushärtenden Kunststoffgießharz umgeben und fixiert.

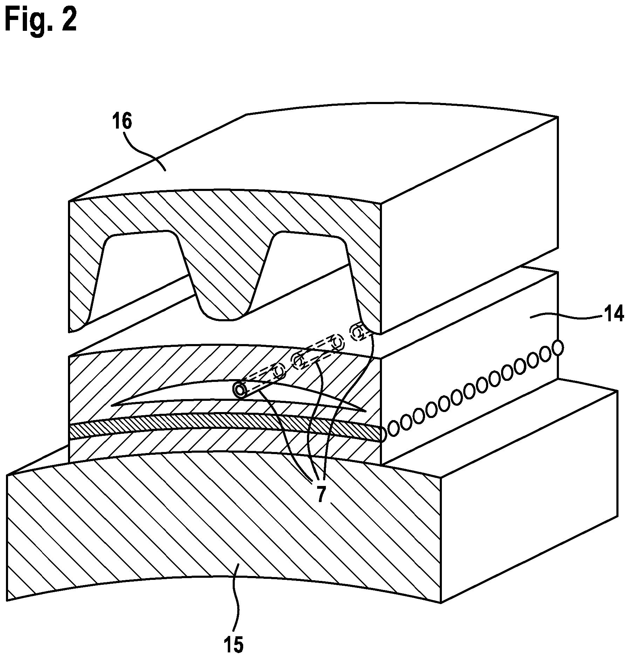

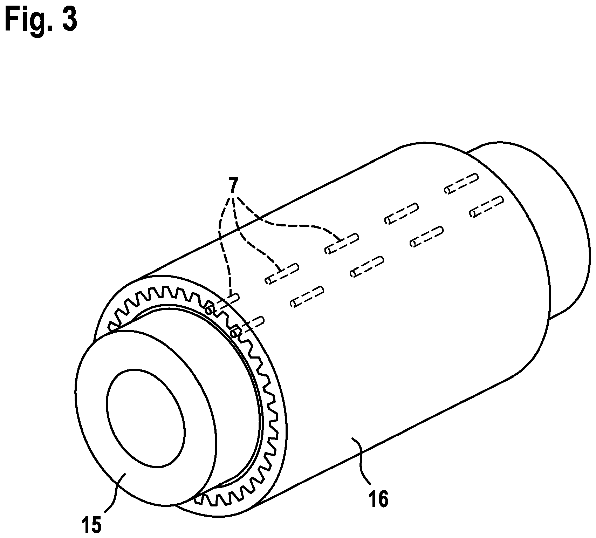

Fig. 2 zeigt in der Mitte einen Ausschnitt aus einem Wickelrohling 14 mit einem eingelegten rohrförmigen Behältnis 7, hier ebenfalls einem kleinen Röhrchen, wobei der Wickelrohling auf der Konfektionstrommel/Riemenaufbautrommel 15 aufgelegt ist und eine umgebende das Profilnegativ aufweisende Heizmanschette 16 bereits zur Vulkanisation herangefahren ist. Während hier alle Teile, d.h. auch Konfektionstrommel und Heizmanschette als Abschnitte dargestellt sind, zeigt die Figur 3 prinzipiell den Zustand nach der Vulkanisation in einer perspektivischen Gesamtansicht, das heißt, nach dem die Heizmanschette 16 zugefahren worden ist und der Rohling zum fertigen Wickel geformt und ausvulkanisierter ist. Erkennbar sind auch hier die segmentweise eingelegten rohrförmigen Behältnisse 7. Angepasst auf die Länge dieser "Einzelröhrchen" können nun die entsprechenden Breitkeilriemen als Abschnitte hergestellt werden.

Nach der Vulkanisation und nach dem Umkrempeln der geschnittenen Einzelriemen ergibt sich dann der in den Fig. 1 und 4 dargestellte Zustand.

In der Fig. 4 ist dabei eine Ausbildung dargestellt, bei der das rohrförmige Behältnis 7 nach Einsatz des elektronischen Bauteils 10 endseitig mit Verschlussstopfen 17 versehen wird.

### Bezugszeichenliste

### (Teil der Beschreibung)

- 1: Antriebsriemen
- 2: Decklage
- 3: Zahnprofil
- 4: Unterbau
- 5: Cord / Zugträger
- 6: Längsrichtung des Riemens
- 7: rohrförmiges Behältnis
- 8: Antriebsriemen
- 9: Flankenwinkel
- 10: Elektronisches Bauteil
- 11: Antenne
- 12: Richtung der größten Ausdehnung des rohrförmigen Behältnisses
- 13: Hauptbiegerichtung des Antriebsriemens
- 14: Wickelrohling
- 15: Riemenaufbautrommel
- 16: Heizmanschette
- 17: Verschlussstopfen

## Patentansprüche

1. Antriebsriemen, ausgebildet als Rollen oder Scheiben umlaufendes längliches Zug-oder Antriebselement (1) aus elastomerem Material mit eingebetteten und in Längsrichtung des Riemens sich erstreckenden Verstärkungselementen bzw. Zugträgern (5), **gekennzeichnet durch** folgende Merkmale:
- der Riemen weist ein oder mehrere im elastomeren Material eingebettete länglich-rohrförmige Behältnisse (7) auf, in deren Hohlraum nach der Vulkanisation elektronische Bauteile (10) positionierbar sind, vorzugsweise Sensoren, Signalverarbeitungs- oder Steuerungseinrichtungen und/oder Übertragungseinrichtungen,
- das rohrförmige Behältnis (7) ist so im elastomeren Material eingebettet, dass seine Längsachse bzw. die Richtung ihrer größten Ausdehnung (12) im Wesentlichen quer zur Hauptbiegerichtung (13) des Riemens ausgerichtet ist
- das rohrförmige Behältnis (7) ist ein Kunststoffrohr bzw. -röhrchen, vorzugsweise aus Polyamid (PA) oder Polyphenylensulfid (PPS).

2. Antriebsriemen nach Anspruch 1, bei dem die elektronischen Bauteile (10) innerhalb des Hohlraums mit einer aushärtenden Masse umgeben und fixiert sind, vorzugsweise mit einem aushärtenden Kunststoffgießharz.

3. Antriebsriemen nach Anspruch 1 oder 2, bei dem die elektronischen Bauteile (10) innerhalb des Hohlraums mit stoßdämpfendem Material umgeben und das rohrförmige Behältnis endseitig mit einem Verschluss oder Stopfen versehen ist.

4. Antriebsriemen nach einem der Ansprüche 1 bis 3, bei dem die elektronischen Bauteile (10) innerhalb des Hohlraums mit wärmeleitfähigem Material umgeben und das rohrförmige Behältnis endseitig mit einem Verschluss oder Stopfen versehen ist.

5. Antriebsriemen nach einem der Ansprüche 1 bis 4, bei dem das rohrförmige Behältnis (7) mit einer Längsseite des Riemens in Verbindung steht und Hohlraum von dort zugänglich ist.

6. Antriebsriemen, nach einem des Ansprüche 1 bis 5, ausgebildet als Zahnriemen oder Breitkeilriemen.

7. Verfahren zur Herstellung eines Antriebsriemens nach Anspruch 6, aufweisend folgende Schritte:
- auf einer Riemenaufbautrommel wird zum Aufbau eines Antriebsriemenrohling zunächst die Rückseite bzw. die elastomere Decklage ein- oder mehrschichtig aufgebaut,
- danach wird der Zugstrang aus einem oder mehreren Festigkeitsträgern auf die Decklage aufgewickelt,
- schließlich wird der später das Profil des Antriebsriemens aufweisende elastomere Unterbau aufgebracht, ggf. gefolgt von einer weiteren Gewebelage,
- dann wird der so entstandene unvulkanisierte Verbund in eine im Durchmesser etwas größere zylindrische Vulkanisationsform oder Vulkanisationsmanschette so eingebracht, dass der Unterbau der mit einem Negativ des Rippenprofils versehenen Innenseite der Vulkanisationsform zugewandt ist,
- danach wird der Antriebsriemenrohling von innen und außen erwärmt und so mit dem umgebenden Negativ der Vulkanisationsform zusammengepresst, dass der Unterbau in das Negativ gedrückt und mit Antriebsriemenprofil versehen wird,
**dadurch gekennzeichnet, dass**
- während des Aufbaus des Antriebsriemenrohlings auf der Riemenaufbautrommel zwischen die einzelnen Lagen oder Schichten der Decklagen oder des Unterbaus über den Umfang des Rohlings länglich-rohrförmige Hohlkörper eingebracht werden, vorzugsweise Röhrchen aus Polyamid (PA) oder Polyphenylensulfid (PPS), in welche nach der Vulkanisation und Fertigstellung der Antriebsriemen elektronische Bauteile einbringbar sind,
- wobei deren Längsachsen bzw. die Richtung ihrer größten Ausdehnung im Wesentlichen parallel zur Achse der Aufbautrommel ausgerichtet werden,
- wobei die Hohlkörper mit dem gesamten Verbund vulkanisiert und in der Elastomermatrix eingebunden werden,
und wobei nach der Vulkanisation einzelne Ringe vom Antriebsriemenrohling abgeschnitten und zu einzelnen Antriebsriemen umgekrempelt werden.

8. Verfahren nach Anspruch 7, bei dem über die Länge des Rohlings auf der Riemenaufbautrommel an einer Umfangsposition jeweils ein länglich-rohrförmiger Hohlkörper oder mehrere mit Abstand hintereinanderliegende Hohlkörper eingebracht werden (segmentweise).

9. Verfahren nach Anspruch 7 oder 8, bei dem zur Fixierung des Hohlkörpers an einer Umfangsposition Drähte oder Zugmittel durch den Hohlkörper geführt sind, die nach der Vulkanisation entfernt werden.

## Claims

1. Drive belt designed as an elongate traction or drive element (1) running around rollers or pulleys and made of an elastomer material, with embedded reinforcing elements or tension members (5) extending in a longitudinal direction of the belt, **characterized by** the following features:
- the belt has one or more elongate tubular receptacles (7) embedded in the elastomer material, it being possible, after vulcanization, for electronic components (10), preferably sensors, signal processing or control devices and/or transmission devices, to be positioned in the cavity of said receptacles,
- the tubular receptacle (7) is embedded in the elastomer material in such a way that its longitudinal axis or the direction of its greatest extent (12) is oriented substantially transversely to the main bending direction (13) of the belt,
- the tubular receptacle (7) is a plastics tube or small tube, preferably made of polyamide (PA) or polyphenylene sulfide (PPS).

2. Drive belt according to Claim 1, in which the electronic components (10) are surrounded and fixed within the cavity by a curing compound, preferably by a curing synthetic casting resin.

3. Drive belt according to Claim 1 or 2, in which the electronic components (10) are surrounded within the cavity by shock-absorbing material, and the tubular receptacle is provided at the end/s with a closure or plug.

4. Drive belt according to any one of Claims 1 to 3, in which the electronic components (10) are surrounded within the cavity by thermally conductive material, and the tubular receptacle is provided at the end/s with a closure or plug.

5. Drive belt according to any one of Claims 1 to 4, in which the tubular receptacle (7) is connected to a longitudinal side of the belt and the cavity is accessible from there.

6. Drive belt according to any one of Claims 1 to 5, designed as a toothed belt or wide V-belt.

7. Method for producing a drive belt according to Claim 6, having the following steps:
- the rear side or the elastomer top ply is first of all built up in a single layer or in multiple layers on a belt building drum to build up a drive belt blank,
- the tension strand comprising one or more strengthening members is then wound onto the top ply,
- finally, the elastomer base, which subsequently has the profile of the drive belt, is applied, optionally followed by a further fabric ply,
- the thus produced non-vulcanized assembly is then inserted in such a way into a cylindrical vulcanization mold or vulcanization sleeve, which is of slightly greater diameter, that the base faces toward the inner side, provided with a negative of the ribbed profile, of the vulcanization mold,
- after which the drive belt blank is heated from the inside and from the outside and compressed with the surrounding negative of the vulcanization mold in such a way that the base is forced into the negative and provided with the drive belt profile,
**characterized in that**
- elongate tubular hollow bodies, preferably small tubes made of polyamide (PA) or polyphenylene sulfide (PPS), into which electronic components can be introduced after vulcanization and completion of the drive belts, are introduced between the individual plies or layers of the top plies or of the base over the circumference of the blank during the building up of the drive belt blank on the belt building drum,
- wherein their longitudinal axes, or the direction of their greatest extent, are/is oriented substantially parallel to the axis of the building drum,
- wherein the hollow bodies are vulcanized to the entire assembly and incorporated in the elastomer matrix, and wherein, after vulcanization, individual rings are cut off from the drive belt blank and turned inside out to form individual drive belts.

8. Method according to Claim 7, in which an elongate tubular hollow body or a plurality of hollow bodies situated one behind the other with a clearance is/are introduced (in segments) at a respective circumferential position over the length of the blank on the belt building drum.

9. Method according to Claim 7 or 8, in which wires or tension means, which are removed after vulcanization, are passed through the hollow body to fix the hollow body at a circumferential position.

## Revendications

1. Courroie d'entraînement, conçue comme un élément de traction ou d'entraînement allongé (1) en matériau élastomère qui s'étend autour de rouleaux ou de poulies et dans laquelle sont incorporés des éléments de renforcement ou des renforts (5) s'étendant dans la direction longitudinale de la courroie, **caractérisée par** les éléments caractéristiques suivants :
- la courroie comporte un ou plusieurs contenants tubulaires allongés (7) qui sont incorporés dans le matériau élastomère et dans la cavité desquels des composants électroniques (10), de préférence des capteurs, des dispositifs de commande ou de traitement de signal et/ou des dispositifs de transmission, peuvent être positionnés après vulcanisation,
- le contenant tubulaire (7) est incorporé dans le matériau élastomère de telle manière que son axe longitudinal ou la direction de sa plus grande extension (12) soit orienté(e) sensiblement transversalement à la direction de flexion principale (13) de la courroie,
- le contenant tubulaire (7) est un tube ou tubule en matière synthétique, de préférence en polyamide (PA) ou en sulfure de polyphénylène (PPS).

2. Courroie d'entraînement selon la revendication 1, dans laquelle les composants électroniques (10) sont entourés et fixés à l'intérieur de la cavité avec une matière durcissable, de préférence avec une résine de coulée de matière synthétique durcissable.

3. Courroie d'entraînement selon la revendication 1 ou 2, dans laquelle les composants électroniques (10) sont entourés, à l'intérieur de la cavité, d'un matériau amortisseur de choc et le contenant tubulaire est pourvu à l'extrémité d'une fermeture ou d'un bouchon.

4. Courroie d'entraînement selon l'une des revendications 1 à 3, dans laquelle les composants électroniques (10) sont entourés, à l'intérieur de la cavité, d'un matériau thermoconducteur et le contenant tubulaire est pourvu à l'extrémité d'une fermeture ou d'un bouchon.

5. Courroie d'entraînement selon l'une des revendications 1 à 4, dans laquelle le contenant tubulaire (7) est relié à un côté longitudinal de la courroie et la cavité est accessible depuis cet endroit.

6. Courroie d'entraînement selon l'une des revendications 1 à 5, conçue sous la forme d'une courroie crantée ou d'une courroie trapézoïdale large.

7. Procédé de fabrication d'une courroie d'entraînement selon la revendication 6, le procédé comprenant les étapes suivantes :
- pour constituer une ébauche de courroie d'entraînement, la face arrière ou la nappe supérieure en élastomère est d'abord constituée en une ou plusieurs couches sur un tambour de construction de courroie,
- puis le brin de traction d'un ou de plusieurs renforts est enroulé sur la nappe supérieure,
- enfin, la sous-structure en élastomère, qui présente plus tard le profil de la courroie d'entraînement, est appliquée, éventuellement suivie d'une autre nappe de tissu,
- ensuite, le composite non vulcanisé résultant est introduit dans un moule de vulcanisation cylindrique ou un manchon de vulcanisation de diamètre légèrement plus grand de telle sorte que la sous-structure soit dirigée vers la face intérieure du moule de vulcanisation qui est pourvue d'un négatif du profil de nervure,
- puis l'ébauche de courroie d'entraînement est chauffée depuis l'intérieur et depuis l'extérieur et est comprimée, donc avec le négatif environnant du moule de vulcanisation, de sorte que la sous-structure soit pressée dans le négatif et pourvue d'un profil de courroie d'entraînement,
**caractérisé en ce que**
- pendant la construction de l'ébauche de courroie d'entraînement sur le tambour de construction de courroie, des corps creux tubulaires allongés, de préférence des tubules en polyamide (PA) ou en sulfure de polyphénylène (PPS), dans lesquels des composants électroniques peuvent être introduits après vulcanisation et achèvement de la courroie d'entraînement, sont introduits entre les nappes ou couches individuelles des couches supérieure ou de la sous-structure sur la circonférence de l'ébauche,
- leurs axes longitudinaux ou la direction de leur plus grande extension étant orientés sensiblement parallèlement à l'axe du tambour de construction,
- les corps creux étant vulcanisés avec le composite entier et liés dans la matrice en élastomère,
et des anneaux individuels étant découpés dans l'ébauche de courroie d'entraînement après vulcanisation et repliés pour former des courroies d'entraînement individuelles.

8. Procédé selon la revendication 7, dans lequel un corps creux tubulaire allongé ou plusieurs corps creux espacés les uns derrière les autres sont introduits (par segments) à une position circonférentielle sur le tambour de construction de courroie sur la longueur de l'ébauche.

9. Procédé selon la revendication 7 ou 8, dans lequel des fils métalliques ou des moyens de traction sont passés à travers le corps creux et retirés après vulcanisation pour fixer le corps creux à une position circonférentielle.
